(19) Europäisches Patentamt / European Patent Office / Office européen des brevets

(11) **EP 1 445 602 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(51) Int Cl.:
*G01N 21/64* (2006.01)    *G01N 21/77* (2006.01)

(21) Anmeldenummer: **04001727.9**

(22) Anmeldetag: **27.01.2004**

(54) **Fluorimetrische Bestimmung von Analyten durch ein intramolekulares Quencher-Fluorophor-Konjugat**

Fluorimetric Determination of an Analyte by an Intramolecular Quencher-Fluorophore-Conjugate

Détermination Fluorométrique d'un analyte avec un Conjugé Intramoleculaire d'un Quencher-Fluorophore

(84) Benannte Vertragsstaaten:
**AT BE BG CH CY CZ DE DK EE ES FI FR GB GR HU IE IT LI LU MC NL PT RO SE SI SK TR**

(30) Priorität: **28.01.2003 DE 10303265**

(43) Veröffentlichungstag der Anmeldung:
**11.08.2004 Patentblatt 2004/33**

(73) Patentinhaber:
• **F. Hoffmann-La Roche AG**
**4070 Basel (CH)**
Benannte Vertragsstaaten:
**AT BE BG CH CY CZ DK EE ES FI FR GB GR HU IE IT LI LU MC NL PT RO SE SI SK TR**
• **Roche Diagnostics GmbH**
**68305 Mannheim (DE)**
Benannte Vertragsstaaten:
**DE**

(72) Erfinder:
• **Horn, Carina Dr.**
**64665 Alsbach-Hähnlein (DE)**

• **Josel, Hans-Peter, Dr.**
**82362 Weilheim (DE)**
• **Spinke, Jürgen, Dr.**
**64653 Lorsch (DE)**
• **Herrmann, Rupert, Dr.**
**82362 Weilheim (DE)**
• **Heindl, Dieter, Dr.**
**82396 Pähl (DE)**

(74) Vertreter: **Weiss, Wolfgang et al**
**Weickmann & Weickmann**
**Patentanwälte**
**Postfach 86 08 20**
**81635 München (DE)**

(56) Entgegenhaltungen:
**US-A- 4 558 130     US-A- 4 656 141**
**US-B1- 6 468 753**

• **PATENT ABSTRACTS OF JAPAN vol. 013, no. 101 (C-574), 9. März 1989 (1989-03-09) & JP 63 277680 A (NIPPON OIL & FATS CO LTD), 15. November 1988 (1988-11-15)**

**Beschreibung**

Die Erfindung betrifft ein Verfahren und ein Reagenz zur fluorimetrischen Bestimmung von Analyten.

Es existieren zahlreiche Möglichkeiten zur Bestimmung von Analyten, beispielsweise für diagnostische Anwendungen. Eine Möglichkeit besteht darin, den Analyten über eine Redoxreaktion und einen Redoxindikator zu bestimmen. Hierbei wirkt ein oxidierendes oder reduzierendes System direkt oder über einen Mediator auf den Redoxindikator ein. Die Anwesenheit des Analyten führt zu einer Reduktion oder Oxidation des Redoxindikators, wodurch eine qualitative oder quantitative Bestimmung erfolgen kann.

Je nach Art des verwendeten Redoxindikators kann die Bestimmung des Indikators durch ein colorimetrisches, fluorimetrisches oder elektrochemisches Nachweisverfahren erfolgen. Beispiele für colorimetrische Nachweisreagenzien sind Heteropolysäuren (EP-B-0 431 456), Tetrazoliumverbindungen (EP-B-0 574 769), nitrosoaromatische Verbindungen (EP-A-O 620 283(), RIND-Verbindungen (EP-B-0 190 740), Phenazine (WO 93/06487) und Indanthrone (EP-B-0 831 327). Beispiele für elektrochemische Nachweisreagenzien sind Nitrosoaromaten, Phenazine, Kaliumhexacyanoferrat und Benzochinone (vgl. z.B. EP-A-0 441 222 und EP-A-0 505 494). Beispiele für fluorimetrische Nachweisreagenzien sind z.B. Resazurin (US 5,912,139), Übergangsmetallkomplexe (Ryabov et al., JBIC 4 (1999), 175-182; Woltman et al., Anal Chem. 71 (1999), 1504-1512) sowie Scopoletin, Esculetin, p-Hydroxyphenylessigsäure, Di-chlorofluorescein, N-acetyl-3,7-dihydroxyphenoxazin, und MNBDH, die ausschließlich zum $H_2O_2$-Nachweis Verwendung finden (siehe auch R. Haughland, Handbook of Fluorescent Probes and Research Chemicals, 6th Ed. 1996).

Die aus dem Stand der Technik bekannten fluorimetrischen Nachweisreagenzien weisen jedoch einige Nachteile auf. So erfordern die meisten bekannten Fluoreszenzindikatoren die Bestimmung von Metaboliten, wie z.B. Glucose über den Nachweis von mit Glucose-Oxidase generiertem $H_2O_2$. Diese Reaktion erfordert meist noch die katalytische Unterstützung des Enzyms Peroxidase und wird stark durch Elektronendonoren, wie z.B. Harnsäure oder Billirubin, gestört. Auch sind die Reagenzien nicht über längere Zeiträume stabil.

Von Vorteil sind dagegen Redoxindikatoren, die einen von Sauerstoff unabhängigen Nachweis von Glucose erlauben, d.h. die anstelle von Sauerstoff direkt ein Elektron von einem oxidierenden Enzym empfangen. Als geeignete Elektronen-Akzeptoren sind dafür allerdings nur Resazurin und Os- oder Ru-Komplexe bekannt. Bei Resazurin überlappt jedoch die Emissionsbande des durch die Redoxreaktion gebildeten Resorufins stark mit der Absorptionsbande des nicht umgesetzten Resazurins, was zu einer deutlichen Verringerung der Empfindlichkeit der Analytbestimmung führt. Die Übergangsmetallkomplexe werden aufgrund ihres hohen Redoxpotentials (z.B. Ru-Komplexe) stark von Verbindungen, wie Ascorbinsäure, gestört. Auch variiert ihre Fluoreszenzeffizienz mit dem Sauerstoffgehalt der Probe.

Des Weiteren ist bei den bisher bekannten Fluoreszenzindikatoren die Verwendung von Anregungslichtquellen vor allem auf den UV und grünen Bereich des Lichtes limitiert. So sind z.B. nur unzureichende Verbindungen bekannt, die die Verwendung der besonders starken blauen und roten LEDs erlaubt.

US 6468753 81 offenbart Anthrachinon-Derivate, welche durch Interkalation mit DNA fluoreszierende Komplexe ausbilden und u.a. zum Anfärben von biologischem Material verwendet werden können. Die Anthrachinon-Derivate umfassen Substituenten X, und $X_2$, welche unabhängig voneinander eine Gruppe NH-A-NR$^1$R$^2$ darstellen, wobei A eine $C_{2-8}$-Alkylengruppe ist, und wobei R$^1$ und R$^2$ unabhängig voneinander aus Wasserstoff, $C_{1-4}$-Alkyl, $C_{2-4}$-Hydroxyalkyl und $C_{2-4}$-Aminoalkyl ausgewählt sind.

JP 63-277680 A offenbart fluoreszierende Porphyrin-Derivate, welche zum Nachweis sowie zur Behandlung von bakteriellen Erkrankungen bzw. von Tumoren verwendet werden können. Die Porphyrin-Derivate umfassen hierzu eine Pyranonaphthochinon-Einheit, welche über eine Amidbindung an den Porphyrin-Grundkörper gebunden ist.

Eine Aufgabe der vorliegenden Erfindung bestand somit darin, neue redoxaktive Verbindungen als Nachweisreagenzien für die fluorimetrische Bestimmung von Analyten bereitzustellen, mit denen die Nachteile des Standes der Technik zumindest teilweise beseitigt werden können.

Die erfindungsgemäße Lösung dieser Aufgabe besteht darin, als Redoxindikatoren intramolekulare Konjugate von Fluorophoren und Quenchern bereitzustellen, deren Fluoreszenz durch die Redoxreaktion veränderbar ist. Insbesondere bei Verwendung von Konjugaten, die reduzierbare oder oxidierbare Quencher enthalten, ist es möglich, universelle Redoxindikatoren bereitzustellen, die je nach Wahl der Fluorophorgruppe beliebige Anregungslichtquellen erlauben. Dieses der vorliegenden Erfindung zugrunde liegende Prinzip konnte am Beispiel eines Chinon-Fluorescein-Konjugates als Redoxindikator bei der fluorimetrischen Bestimmung von Glucose gezeigt werden. Die Chinongruppe des Konjugats ist eine Quenchergruppe, welche die Fluoreszenz der Fluorophorgruppe Fluorescein unterdrückt. Bei enzymatischer Reduktion des Chinons zum Dihydrochinon wird dieser Quencheffekt aufgehoben, so dass - je nach Ausmaß der Redoxreaktion - die Fluoreszenz des Redoxindikator zunimmt. Entsprechend können Konjugate mit anderen Quenchergruppen und Fluorophorgruppen eingesetzt werden. Als Quenchergruppen kommen dabei alle in den Ansprüchen definierten Moleküle in Frage, die durch eine molekulare Interaktion die Fluoreszenzintensität oder Fluoreszenzlebensdauer der speziell ausgesuchten Fluorophorgruppe teilweise reduzieren oder ganz löschen. Beispiele für die der molekularen Interaktion zugrunde liegenden Prozesse sind "dynamic quenching", "static quenching", Komplexbildung, Elektronentransfer, Energietransfer, Ladungstransfer, "photon induced electron transfer (PET)" und "photon induced charge transfer (PCT)". So kann eine Quenchergruppe auch eine Akzeptorgruppe sein, deren Absorptionsbande im oxidierten oder reduzierten Zustand mit der Emissionsbande des Fluorophors (Donor) überlappt und durch Dipol-Dipol-Wechselwirkung die Fluoreszenzintensität oder Fluoreszenzlebensdauer der Fluorophorgruppe (Donor) teilweise oder ganz reduziert (sogenannte "fluorescence resonance energy transfer (FRET)" (vgl. hierzu: J.R. Lakowicz, Pronciples of Fluorescence Spectroscopy, Kluwer Academic/Plenum Publishers, New York, 1999).

Ein erster Aspekt der vorliegenden Erfindung ist somit ein Verfahren zum Nachweis eines Analyten durch eine Redoxreaktion und eine fluorimetrische Bestimmung, dadurch gekennzeichnet, dass man eine den Analyten enthaltende Probe mit einem Nachweisreagenz in Kontakt bringt, das als fluorimetrischen Redoxindikator eine Verbindung der allgemeinen Formel (I) enthält:

$$Q - F \qquad (I)$$

worin Q eine durch die Redoxreaktion reduzierbare oder oxidierbare Quenchergruppe ist, deren Quencheraktivität sich in Abhängigkeit vom Redoxzustand ändert, wobei die reduzierbare Quenchergruppe ausgewählt ist aus Chinonen, aromatischen Nitrosoverbindungen, Nitrosoanilinen, Nitrosobenzolderivaten, N-oxiden, N-oxiden, bei denen das Stickstoffatom der N-oxid-Gruppe Bestandteil eines aromatischen Ringsystems ist, Benzofuranen, Nitrosonaphthalimiden, Spin-Label, Tetrazoliumverbindungen, Phenazinen, Pyridinen, Anthrachinonen, Chinoxalinen, Pyrimidochinonen, Phenylhydroxylaminen, Indanthronen, Phenanthrenchinonen, und organischen Metallkomplexen, und wobei die oxidierbare Quenchergruppe ausgewählt ist aus Hydrochinonen, Phenylendiaminen, Dihydrophenazinen, Dihydronaphthochinonen, Dihydroanthrachinonen und organischen Metallkomplexen, und worin F eine durch die Redoxreaktion nicht reduzierbare oder oxidierbare Fluorophorgruppe ist, wobei die Quenchergruppe die Fluoreszenzintensität oder Fluoreszenziebensdauer der Fluorophorgruppe F teilweise reduziert oder ganz löscht, und wobei zur fluorimetrischen Bestimmung ein Anregungslicht mit einer vorbestimmten Wellenlänge auf die Probe gestrahlt und das von der Probe ausgehende Fluoreszenz-Emissionslicht, das eine unterschiedliche Wellenlänge aufweist, bestimmt wird.

Verbindungen der allgemeinen Formel Q-F sind prinzipiell bereits im Stand der Technik beschrieben (vgl. beispielsweise Zhang et al., Journal of Photochemistry and Photobiology A: Chemistry 103 (1997), 63-67; Song et al., Dyes and Pigments 42 (1999), 149-158).

Die vorliegende Erfindung eignet sich um Nachweis beliebiger Analyten, die durch eine Redoxreaktion bestimmt werden können. Der Nachweis kann qualitativ, semi-quantitativ oder quantitativ erfolgen. In einer Ausführungsform der Erfindung kann der Analyt eine reduzierbare oder oxidierbare Substanz sein, beispielsweise ein in einer Körperflüssigkeit, wie etwa Blut, Serum, Plasma, Urin etc., vorhandener Metabolit. In diesem Fall verwendet man zweckmäßigerweise ein Nachweisreagenz, das neben dem Redoxindikator weiterhin ein oder mehrere Enzyme zur Reduktion oder Oxidation des Analyten sowie gegebenenfalls Coenzyme, wie Nicotinnucleosid-Derivate, z.B. NAD$^+$, NADP$^+$, oder Flavinnucleosid-Derivate, z.B. FAD, enthält. Bevorzugte Beispiele für derartige Analyten sind Glucose, Lactat, Alkohol, Galactose, Cholesterol, Fructose, Phenylalanin, Alanin, Leucin, Glycerol, Pyruvat und Creatinin. Der Nachweis von Glucose kann beispielsweise nach bekannten Verfahren mit Glucose-Oxidase oder Glucose-Dehydrogenase/Diaphorase erfolgen.

Darüber hinaus kann der Analyt jedoch auch ein ein Redoxreaktion katalysierendes Enzym sein, beispielsweise eine Oxidoreduktase, wie etwa Glucoseoxidase (GOD), Glucose-Dye-Oxidoreductase (GlucDOR), Dehydrogenase, oder ein Enzym, dessen Reaktion an eine Oxidoreductase-Reaktion gekoppelt werden kann, wie z.B. Glutamat-Oxaloacetat-Transferase (GOT).

Neben dem Redoxindikator und - sofern erforderlich - einem Enzym zur Reduktion oder Oxidation des Analyten kann das Nachweisreagenz weitere übliche Bestandteile, wie etwa Coenzyme, Hilfssubstanzen, Enzymkaskaden, Puffer und gegebenenfalls Mediatoren, enthalten. Als Mediatoren sind Substanzen geeignet, welche die Elektronenaufnahme oder -abgabe des Redoxindikators (I) unterstützen. Generell sind jedoch solche Redoxindikatoren (I) bevorzugt, die direkt Elektronen aufnehmen oder abgeben können.

Die Durchführung des erfindungsgemäßen Verfahrens erfolgt in üblichen Testformaten, beispielsweise in Trokken- und Nasstests. Bei einem Trockentest wird als Träger ein saugfähiges Material, z.B. in Form eines Teststreifens, verwendet, auf dem das Nachweisreagenz in trockener Form, z.B. als Lyophilisat, aufgebracht sein kann. Flüssigtests wiederum werden in einer Flüssigphase in geeignete Reaktionsgefäßen, z.B. Küvetten, Mikrotiterplatten etc., durchgeführt, wobei das Nachweisreagenz im Reaktionsgefäß selbst oder in separaten Behältern in trockener oder flüssiger Form vorgelegt werden kann.

Zur fluorimetrischen Bestimmung wird ein Anregungslicht mit einer vorbestimmten Wellenlänge auf die Probe gestrahlt und das von der Probe ausgehende Fluoreszenz-Emissionslicht, das eine unterschiedliche Wellenlänge aufweist, wird nach bekannten Methoden bestimmt. Durch die freie Auswahl von Fluorophoren ermöglicht die vorliegende Erfindung die Bereitstellung eines für die Bestimmung beliebiger Analyten optimierter Testformate.

Die Fluoreszenzaktivität des erfindungsgemäßen Redoxindikators (I) ist unterschiedlich, je nachdem, ob die Verbindung im oxidierten oder im reduzierten Zustand vorliegt. Die Quenchergruppe Q ist eine durch die Redoxreaktion reduzierbare oder oxidierbare Gruppe, deren Quencheraktivität, d.h. deren Fähigkeit zur zumindest teilweisen Löschung der Fluoreszenz einer benachbarten Fluorophorgruppe, sich abhängig vom Redoxzustand ändert. Im Gegensatz dazu ist die Fluorophorgruppe F eine durch die Redoxreaktion nicht reduzierbare oder oxidierbare Gruppe.

Die Quenchergruppe ist vorzugsweise kovalent an die Fluorophorgruppe gekoppelt. Die Kopplung kann direkt oder über einen Linker erfolgen. Als Linker können bekannte lineare oder verzweigte Linkergruppen, z.B. Alkylengruppen, die gegebenenfalls Heteroatome, wie etwa O, N oder S, enthalten, oder Peptide verwendet werden. Die Kettenlänge des Linkers beträgt vorzugsweise 1-20 Atome.

Der Unterschied in der Fluoreszenzintensität des Redoxindikators im gequenchten und ungequenchten Zustand beträgt vorzugsweise zwischen 5 % und 100 %. Eine vollständige Unterdrückung der Fluoreszenz im gequenchten Zustand ist jedoch nicht notwendig, da die Restfluoreszenz für Kalibrationszwecke verwendet werden kann.

Die Quenchergruppe Q kann eine reduzierbare Gruppe sein, wobei sich die Quencheraktivität durch die Reduktion verstärken oder verringern kann. Vorzugsweise wird durch die Reduktion die Quencheraktivität verringert. Erfindungsgemäß handelt es sich bei der reduzierbaren Quenchergruppe um Chinone, aromatische Nitrosoverbindungen, wie Nitrosoaniline und andere Nitrosobenzolderivate, N-oxide, vor allem N-oxide, bei denen das Stickstoffatom der N-oxid-Gruppe Bestandteil eines aromatischen Ringsystems ist, Benzofurane, Nitrosonaphthalimide, sogenannte Spin-Label, Tetrazoliumverbindungen, Phenazine, Pyridine, Anthrachinone, Chinoxaline, Pyrimidochinone, Phenylhydroxylamine, Indanthrone, Phenanthrenchinone, und organische Metallkomplexe.

Alternativ kann die Quenchergruppe Q eine oxidierbare Gruppe sein, wobei sich durch die Oxidation die Quencheraktivität verstärken oder verringern kann. Vorzugsweise wird durch die Oxidation die Quencheraktivität erhöht. Erfindungsgemäß handelt es sich bei der oxidierbaren Quenchergruppe um Hydrochinone, Phenylendiamine, Dihydrophenazine, Dihydronaphthochinone, Dihydroanthrachinone, und organische Metallkomplexe.

Wie bereits ausgeführt, ist die Fluorophorgruppe F eine durch die Redoxreaktion nicht reduzierbare oder oxidierbare Gruppe. Auf diese Weise ist eine sehr breite Auswahl von F aus bekannten Fluorophorgruppen möglich. Bevorzugte Beispiele für Fluorophorgruppen sind Fluorescein und Fluorescein-Derivate, Rhodamine, Tetramethylrhodamine, Coumarine, Resorufine, Pyrene, Anthracene, Phenylene, Phthalocyanine, Cyanine, Xanthene, Amidopyrylium-Farbstoffe, Oxazine, Quadrain-Farbstoffe, Carbopyronine, NBD-Derivate, BODIPY™ Fluorophore (von Molecular Probes, Inc.), ALEXA™ Fluorophore (von Molecular Probes, Inc.), Lanthanid-Chelate, Metalloporhyrine, NIR Fluorophore, Rhodol Farbstoffe, Naphthalimide und Porphyrine. Besonders bevorzugt sind solche Fluorophore, die durch blaues Licht oder rotes Licht angeregt werden können.

Ein weiterer Aspekt der Erfindung ist ein Reagenz zum Nachweis eines Analyten durch eine Redoxreaktion und eine fluorimetrische Bestimmung, umfassend als Redoxindikator eine Verbindung der allgemeinen Formel (I):

$$Q\text{-}F \qquad (I)$$

worin Q eine durch die Redoxreaktion reduzierbare oder oxidierbare Quenchergruppe ist, deren Quencheraktivität sich in Abhängigkeit vom Redoxzustand ändert, wobei die reduzierbare Quenchergruppe ausgewählt ist aus Chinonen, aromatischen Nitrosoverbindungen, Nitrosoanilinen, Nitrosobenzolderivaten, N-oxiden, N-oxiden, bei denen das Stickstoffatom der N-oxid-Gruppe Bestandteil eines aromatischen Ringsystems ist, Benzofuranen, Nitrosonaphthalimiden, Spin-Label, Tetrazoliumverbindungen, Phenazinen, Pyridinen, Anthrachinonen, Chinoxalinen, Pyrimidochinonen, Phenylhydroxylaminen, Indanthronen, Phenanthrenchinonen, und organischen Metallkomplexen, und wobei die oxidierbare Quenchergruppe ausgewählt ist aus Hydrochinonen, Phenylendiaminen, Dihydrophenazinen, Dihydrönaphthochinonen, Dihydroanthrachinonen und organischen Metallkomplexen, und worin F eine durch die Redoxreaktion nicht reduzierbare oder oxidierbare Fluorophorgruppe ist, wobei die Quenchergruppe Q die Fluoreszenzintensität oder Fluoreszenzlebensdauer der Fluorophorgruppe F teilweise reduziert oder ganz löscht, dadurch gekennzeichnet, dass das Reagenz weiterhin ein Enzym zur Reduktion oder Oxidation des Analyten und gegebenenfalls ein Coenzym enthält.

Neben dem Redoxindikator und dem Enzym kann das erfindungsgemäße Reagenz noch weitere Bestandteile, ausgewählt aus Coenzymen, Hilfsstoffen, Puffern und Mediatoren enthalten.

Weiterhin soll die vorliegende Erfindung durch die nachfolgenden Abbildungen und das Beispiel erläutert werden.

**Abbildung 1** zeigt ein Chinon-Fluorescein-Konjugat als Beispiel für einen erfindungsgemäßen Redoxindikator.

**Abbildung 2** zeigt die Kinetik der Chinon-Fluorescein-Reduktion in einem System zum Nachweis von Glucose bei verschiedenen Glucosekonzentrationen.

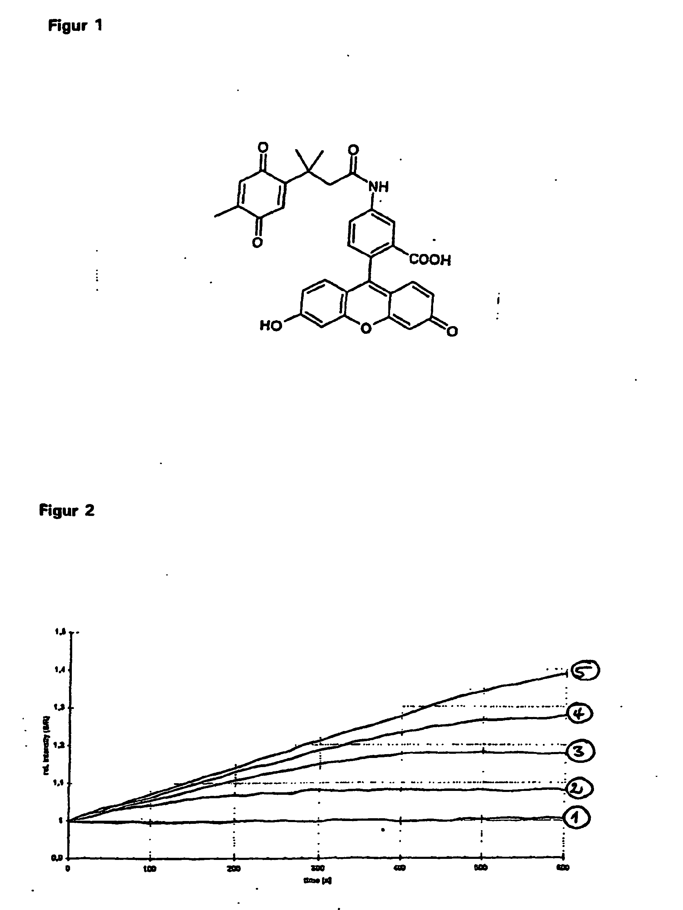

**Beispiel 1: Synthese eines Chinon-Fluorescein-Derivates (Abbildung 1)**

Die Synthese des Chinonderivats 2-Methylchinon-3,3'-dimethylpropionsäure erfolgt in Analogie zu Borchardt et al., J. Amer. Chem. Soc. (1972) 94 (26), 9175-9182.

Zur Umsetzung wird 93 mg Triphosgen (Merck Best-Nr. 814283) in 6 ml Tetrahydrofuran gelöst und unter Inertbedingungen und Eiskühlung 70 μl Dimethylformid hinzugefügt. Man gibt 312 mg 5-Aminofluorescein (Fluka Best-Nr. 07980), 200 mg Chinonderivat und 375 μl Triethylamin hinzu.

Nach entsprechender Umsetzung nimmt man das Produktgemisch in Eiswasser auf und extrahiert mehrmals

mit Essigester. Die vereinigten Esterphasen werden mit Wasser extrahiert und anschließend über Calciumchlorid getrocknet.

Die weitere Aufreinigung erfolgt über präparative HPLC.

Ausbeute 70 mg; Massenspektrum entspricht der Theorie.

**Beispiel 2: Glucosebestimmung mit einem Chinon-Fluorescein-Derivat als Redoxindikator**

Reaktionsschema:

$$\text{GlucDH/Diaphorase}$$

$$\text{Glucose+Chinon-Fluorescein-Derivat} \text{-----------------------------------------------} >$$

$$\text{Gluconolacton + Hydrochinon-Fluorescein-Derivat}$$

In einer 3 ml Fluoreszenzküvette wurden folgende Verbindungen vorgelegt (die Konzentrationsangaben beziehen sich dabei auf die Endkonzentration in der Küvette):

| | |
|---|---|
| Glucose-Dehydrogenase (GlucDH): | 1,3 U/ml |
| Diaphorase: | 1,3 U/ml |
| NAD$^+$: | 36,9 umol/l |
| Chinon-Fluorescein (Abbildung 1; aus Beispiel 1): | 35,4 umol/l |

Durch Zugabe einer wässrigen Glucoselösung (0,1 M Phosphat Puffer, pH 7,4 mit 1 % NaCl) wurde die Reaktion gestartet. Die Kinetik der Reaktion wurde dabei bei einer Anregungswellenlänge von 470 nm und einer Emissionswellenlänge von 525 nm für verschiedene Glucosekonzentrationen aufgenommen. Das Ergebnis des Versuchs ist in Abbildung 2 dargestellt. Die Kurven mit der Ziffer 1, 2, 3, 4, und 5 entsprechen dabei Glucosekonzentrationen von 0 mg/dl, 4 mg/dl, 6 mg/dl, 7 mg/dl, und 8 mg/dl, wobei die relativen Intensitäten gegen die Zeit in Sekunden aufgetragen sind.

Aus Abbildung 2 ist zu erkennen, dass eine Zunahme der Fluoreszenz gefunden wird, die proportional zu der in der Probe vorhandenen Glucosekonzentration ist.

**Patentansprüche**

1. Verfahren zum Nachweis eines Analyten durch eine Redoxreaktion und eine fluorimetrische Bestimmung, **dadurch gekennzeichnet,**
   **dass** man eine den Analyten enthaltende Probe mit einem Nachweisreagenz in Kontakt bringt, das als fluorimetrischen Redoxindikator eine Verbindung der allgemeinen Formel (I) enthält:

   Q-F         (I)

   worin Q eine durch die Redoxreaktion reduzierbare oder oxidierbare Quenchergruppe ist, deren Quencheraktivität sich in Abhängigkeit vom Redoxzustand ändert,
   wobei die reduzierbare Quenchergruppe ausgewählt ist aus Chinonen, aromatischen Nitrosoverbindungen, Nitrosoanilinen, Nitrosobenzolderivaten, N-oxid, N-oxid, bei denen das Stickstoffatom der N-oxid-Gruppe Bestandteil eines aromatischen Ringsystems ist, Benzofuranen, Nitrosonaphthalimiden, Spin-Label, Tetrazoliumverbindungen, Phenazinen, Pyridinen, Anthrachinonen, Chinoxalinen, Pyrimidochinonen, Phenylhydroxylaminen, Indanthronen, Phenanthrenchinonen, und organischen Metallkomplexen, und
   wobei die oxidierbare Quenchergruppe ausgewählt ist aus Hydrochinonen, Phenylendiaminen, Dihydrophenazinen, Dihydronaphthochinonen, Dihydroanthrachinonen und organischen Metallkomplexen,
   und worin F eine durch die Redoxreaktion nicht reduzierbare oder oxidierbare Fluorophorgruppe ist,
   wobei die Quenchergruppe Q die Fluoreszenzintensität oder Fluoreszenzlebensdauer der Fluorophorgruppe F teilweise reduziert oder ganz löscht,

und wobei zur fluorimetrischen Bestimmung ein Anregungslicht mit einer vorbestimmten Wellenlänge auf die Probe gestrahlt und das von der Probe ausgehende Fluoreszenz-Emissionslicht, das eine unterschiedliche Wellenlänge aufweist, bestimmt wird.

2. Verfahren nach Anspruch 1,
   **dadurch gekennzeichnet,**
   **dass** F ausgewählt wird aus Fluoresceinen, Fluorescein-Derivaten, Rhodaminen, Tetramethylrhodaminen, Coumarinen, Resorufinen, Pyrenen, Anthracenen, Phenylenen, Phthalocyaninen, Cyaninen, Xanthenen, Amidopyrylium-Farbstoffen, Oxazinen, Quadrain-Farbstoffen, Carbopyroninen, NBD-Derivaten, BODIPY Fluorophoren, ALEXA Fluorophoren, Lanthanid-Chelaten, Metalloporhyrinen, NIR Fluorophoren, Rhodol Farbstoffen, Naphthalimiden und Porphyrinen.

3. Verfahren nach Anspruch 1 oder 2,
   **dadurch gekennzeichnet,**
   **dass** in dem Redoxindikator (I) Q über einen Linker an F gebunden ist.

4. Verfahren nach Anspruch 3,
   **dadurch gekennzeichnet,**
   **dass** der Linker eine Kettenlänge von 1-20 Atomen aufweist.

5. Verfahren nach einem der Ansprüche 1 bis 4,
   **dadurch gekennzeichnet,**
   **dass** der Redoxindikator (I) direkt Elektronen aufnehmen oder abgeben kann.

6. Verfahren nach einem der Ansprüche 1 bis 4,
   **dadurch gekennzeichnet,**
   **dass** der Redoxindikator (I) über einen Mediator Elektronen aufnehmen oder abgeben kann.

7. Verfahren nach einem der Ansprüche 1 bis 6,
   **dadurch gekennzeichnet,**
   **dass** man als Analyten eine reduzierbare oder oxidierbare Substanz nachweist.

8. Verfahren nach Anspruch 7,
   **dadurch gekennzeichnet,**
   **dass** man ein Nachweisreagenz verwendet, das weiterhin ein Enzym und gegebenenfalls ein Coenzym zur Reduktion oder Oxidation des Analyten enthält.

9. Verfahren nach Anspruch 7 oder 8,
   **dadurch gekennzeichnet,**
   **dass** man als Analyten Glucose, Lactat, Alkohol, Galactose, Cholesterol, Fructose, Phenylalanin, Alanin; Leucin, Glycerol, Pyruvat oder Creatinin nachweist.

10. Verfahren nach Anspruch 9,
    **dadurch gekennzeichnet,**
    **dass** man einen Nachweis von Glucose mit Glucose-Oxidase oder Glucose-Dehydrogenase/Diaphorase durchführt.

11. Verfahren nach einem der Ansprüche 1 bis 6,
    **dadurch gekennzeichnet,**
    **dass** man als Analyten ein eine Redoxreaktion katalysierendes Enzym nachweist.

12. Verfahren nach Anspruch 11,
    **dadurch gekennzeichnet,**
    **dass** man als Analyten ein Enzym, dessen Reaktion an eine Oxidoreductase-Reaktion gekoppelt werden kann, nachweist.

13. Verfahren nach einem der Ansprüche 1 bis 4,
    **dadurch gekennzeichnet,**
    **dass** Q eine Akzeptorgruppe ist, deren Absorptionsbande im reduzierten oder oxidierten Zustand mit der Emissionsbande von F überlappt.

14. Reagenz zum Nachweis eines Analyten durch eine Redoxreaktion und eine fluorimetrische Bestimmung, umfassend als Redoxindikator eine Verbindung der allgemeinen Formel (I):

Q - F            (I)

worin Q eine durch die Redoxreaktion reduzierbare oder oxidierbare Quenchergruppe ist, deren Quencheraktivität sich in Abhängigkeit vom Redoxzustand ändert,
wobei die reduzierbare Quenchergruppe ausgewählt ist aus Chinonen, aromatischen Nitrosoverbindungen, Nitrosoanilinen, Nitrosobenzolderivaten, N-oxiden, N-oxiden, bei denen das Stickstoffatom der N-oxid-Gruppe Bestandteil eines aromatischen Ringsystems ist, Benzofuranen, Nitrosonaphthalimiden, Spin-Label, Tetrazoliumverbindungen, Phenazinen, Pyridinen, Anthrachinonen, Chinoxalinen, Pyrimidochinonen, Phenylhydroxylaminen, Indanthronen, Phenanthrenchinonen, und organischen Metallkomplexen, und
wobei die oxidierbare Quenchergruppe ausgewählt ist aus Hydrochinonen, Phenylendiaminen, Dihydrophenazinen, Dihydronaphthochinonen, Dihydroanthrachinonen und organischen Metallkomplexen,
und worin F eine durch die Redoxreaktion nicht reduzierbare oder oxidierbare Fluorophorgruppe ist,
wobei die Quenchergruppe Q die Fluoreszenzintensität oder Fluoreszenzlebensdauer der Fluorophorgruppe F teilweise reduziert oder ganz löscht,
**dadurch gekennzeichnet,**
**dass** das Reagenz weiterhin ein Enzym zur Reduktion oder Oxidation des Analyten und gegebenenfalls ein Coenzym enthält.

15. Reagenz nach Anspruch 14, umfassend weitere Bestandteile ausgewählt aus Hilfsstoffen, Puffern und Mediatoren.

**Claims**

1. A method for detecting an analyte by a redox reaction and a fluorimetric determination,
**characterized in that**
a sample containing the analyte is contacted with a detection reagent which contains a compound of the general formula (I) as a fluorimetric redox indicator:

Q - F            (I)

wherein Q is a quencher group that can be reduced or oxidized by the redox reaction and whose quencher activity changes as a function of the redox state, wherein the reducible quencher group is selected from quinones, aromatic nitroso compounds, nitrosoanilines, nitrosobenzene derivatives, N-oxides, N-oxides in which the nitrogen atom of the N-oxide group is a component of an aromatic ring system, benzofurans, nitrosonaphthalimides, spin labels, tetrazolium compounds, phenazines, pyridines, anthraquinones, quinoxalines, pyrimidoquinones, phenylhydroxylamines, indanthrones, phenanthrenequinones and organic metal complexes, and
wherein the oxidizable quencher group is selected from hydroquinones, phenylenediamines, dihydrophenazines, dihydronaphthoquinones, dihydroanthraquinones and organic metal complexes,
and wherein F is a fluorophore group that cannot be reduced or oxidized by the redox reaction,
wherein the quencher group Q partially reduces or completely quenches the fluorescence intensity or fluorescence lifetime of the fluorophore group F,
and wherein, for the fluorimetric determination, the sample is irradiated with excitation light of a predetermined wavelength and the fluorescence emission light emitted by the sample that has a different wavelength is determined.

2. The method as claimed in claim 1,
**characterized in that**
F is selected from fluoresceins, fluorescein derivatives, rhodamines, tetramethylrhodamines, coumarins, resorufins, pyrenes, anthracenes, phenylenes, phthalocyanines, cyanines, xanthenes, amidopyrylium dyes, oxazines, quadrain dyes, carbopyronines, NBD derivatives, BODIPY fluorophores, ALEXA fluorophores, lanthanide chelates, metalloporphyrins, NIR fluorophores, rhodol dyes, naphthalimides and porphyrins.

3. The method as claimed in claim 1 or 2,
**characterized in that**

in the redox indicator (I) Q is bound to F by a linker.

4. The method as claimed in claim 3,
   **characterized in that**
   the linker has a chain length of 1-20 atoms.

5. The method as claimed in any one of claims 1 to 4,
   **characterized in that**
   the redox indicator (I) can directly accept or release electrons.

6. The method as claimed in any one of claims 1 to 4,
   **characterized in that**
   the redox indicator (I) can accept or release electrons via a mediator.

7. The method as claimed in any one of claims 1 to 6,
   **characterized in that**
   a reducible or oxidizable substance is detected as the analyte.

8. The method as claimed in claim 7,
   **characterized in that**
   a detection reagent is used that additionally contains an enzyme and optionally a coenzyme for reducing or oxidizing the analyte.

9. The method as claimed in claim 7 or 8,
   **characterized in that**
   glucose, lactate, alcohol, galactose, cholesterol, fructose, phenylalanine, alanine, leucine, glycerol, pyruvate or creatinine are detected as analytes.

10. The method as claimed in claim 9,
    **characterized in that**
    glucose is detected using glucose oxidase or glucose dehydrogenase/diaphorase.

11. The method as claimed in any one of claims 1 to 6,
    **characterized in that**
    an enzyme catalysing a redox reaction is detected as the analyte.

12. The method as claimed in claim 11,
    **characterized in that**,
    an enzyme whose reaction can be coupled to an oxidoreductase reaction is detected as the analyte.

13. The method as claimed in any one of claims 1 to 4,
    **characterized in that**
    Q is an acceptor group whose absorption band in the reduced or oxidized state overlaps the emission band of F.

14. A reagent for detecting an analyte by a redox reaction and a fluorimetric determination, comprising a compound of the general formula (I) as a redox indicator:

$$Q - F \qquad (I)$$

wherein Q is a quencher group that can be reduced or oxidized by the redox reaction and whose quencher activity changes as a function of the redox state, wherein the reducible quencher group is selected from quinones, aromatic nitroso compounds, nitrosoanilines, nitrosobenzene derivatives, N-oxides, N-oxides in which the nitrogen atom of the N-oxide group is a component of an aromatic ring system, benzofurans, nitrosonaphthalimides, spin labels, tetrazolium compounds, phenazines, pyridines, anthraquinones, quinoxalines, pyrimidoquinones, phenylhydroxylamines, indanthrones, phenanthrenequinones and organic metal complexes, and
wherein the oxidizable quencher group is selected from hydroquinones, phenylenediamines, dihydrophenazines, dihydronaphthoquinones, dihydroanthraquinones and organic metal complexes,
and wherein F is a fluorophore group that cannot be reduced or oxidized by the redox reaction,

wherein the quencher group Q partially reduces or completely quenches the fluorescence intensity or fluorescence lifetime of the fluorophore group F,
**characterized in that**
the reagent further contains an enzyme for reducing or oxidizing the analyte and optionally a coenzyme.

15. The reagent as claimed in claim 14, further comprising other components selected from auxiliary substances, buffers and mediators.

**Revendications**

1. Procédé de détection d'un analyte par une réaction redox et une détermination fluorimétrique,
**caractérisé en ce que**
l'on met en contact un échantillon contenant l'analyte avec un réactif de détection qui contient comme indicateur redox fluorimétrique, un composé de formule générale (I) :

$$Q-F \qquad (I)$$

dans laquelle Q est un groupe quencher réductible ou oxydable par la réaction redox dont l'activité de quencher se modifie en fonction de l'état redox,
le groupe quencher réductible étant choisi parmi les quinones, les composés nitroso aromatiques, les nitroso-anilines, les dérivés de nitrosobenzène, les N-oxydes, les N-oxydes dans lesquels l'atome d'azote du groupe N-oxyde est un composant d'un système cyclique aromatique, les benzofuranes, les nitrosonaphtalimides, les marqueurs de spin, les composés de tétrazolium, les phénazines, les pyridines, les anthraquinones, les quinoxalines, les pyrimidoquinones, les phénylhydroxylamines, les indanthrones, les phénanthrène-quinones et les complexes métalliques organiques, et
le groupe quencher oxydable étant choisi parmi les hydroquinones, les phénylènediamines, les dihydrophénazines, les dihydronaphtoquinones, les dihydroanthraquinones et les complexes métalliques organiques et dans lequel F est un groupe fluorophore non réductible ou oxydable par la réaction redox,
le groupe quencher Q réduisant partiellement ou supprimant complètement l'intensité de fluorescence ou la durée de persistance de la fluorescence du groupe fluorophore F,
et dans lequel pour la détermination fluorimétrique, une lumière d'excitation irradie l'échantillon à une longueur d'ondes prédéterminée et la lumière d'émission de fluorescence partant de l'échantillon qui présente une longueur d'onde différente est déterminée.

2. Procédé selon la revendication 1,
**caractérisé en ce que**
F est choisi parmi les fluorescéines, les dérivés de fluorescéine, les rhodamines, les tétraméthylrhodamines, les coumarines, les résorufmes, les pyrènes, les anthracènes, les phénylènes, les phtalocyanines, les cyanines, les xanthènes, les colorants amidopyrylium, les oxazines, les colorants quadraïne, les carbopyronines, les dérivés de NBD, les fluorophores BODIPY, les fluorophores ALEXA, les chélateurs lanthanides, les métalloporhyrines, les fluorophores NIR, les colorants rhodol, les naphtalimides et les porphyrines.

3. Procédé selon la revendication 1 ou 2,
**caractérisé en ce que**
dans l'indicateur redox (I), Q est lié à F par un segment de liaison.

4. Procédé selon la revendication 3,
**caractérisé en ce que**
le segment de liaison présente une longueur de chaîne de 1 à 20 atomes.

5. Procédé selon l'une des revendications 1 à 4,
**caractérisé en ce que**
l'indicateur redox (I) peut absorber ou restituer directement des électrons.

6. Procédé selon l'une des revendications 1 à 4,
**caractérisé en ce que**
l'indicateur redox (I) peut absorber ou restituer des électrons par un médiateur.

**7.** Procédé selon l'une des revendications 1 à 6
**caractérisé en ce que**
l'on détecte comme analytes, une substance réductible ou oxydable.

**8.** Procédé selon la revendication 7,
**caractérisé en ce que**
l'on utilise un réactif de détection qui contient en outre une enzyme et éventuellement une co-enzyme pour la réduction ou l'oxydation de l'analyte.

**9.** Procédé.selon la revendication 7 ou 8,
**caractérisé en ce que**
l'on détecte comme analytes, le glucose, le lactate, un alcool, le galactose, le cholestérol, le fructose, la phénylalanine, l'alanine, la leucine, le glycérol, le pyruvate ou la créatinine.

**10.** Procédé selon la revendication 9,
**caractérisé en ce que**
l'on réalise une détection du glucose avec la glucose-oxydase ou la glucose-déshydrogénase/diaphorase.

**11.** Procédé selon l'une des revendications 1 à 6,
**caractérisé en ce que**
l'on détecte comme analytes, une enzyme catalysant une réaction redox.

**12.** Procédé selon la revendication 11,
**caractérisé en ce que**
l'on détecte comme analytes, une enzyme dont la réaction peut être couplée à une réaction d'oxydoréductase.

**13.** Procédé selon l'une des revendications 1 à 4,
**caractérisé en ce que**
Q est un groupe accepteur dont la bande d'absorption à l'état réduit ou oxydé, se superpose à la bande d'émission de F.

**14.** Réactif pour la détection d'un analyte par une réaction redox et une détermination fluorimétrique, comprenant comme indicateur redox, un composé de formule générale (I) :

Q-F          (I)

dans laquelle Q est un groupe quencher réductible ou oxydable par la réaction redox dont l'activité de quencher se modifie en fonction de l'état redox,
le groupe quencher réductible étant choisi parmi les quinones, les composés nitroso aromatiques, les nitroso-anilines, les dérivés de nitrosobenzène, les N-oxydes, les N-oxydes dans lesquels l'atome d'azote du groupe N-oxyde est un composant d'un système cyclique aromatique, les benzofuranes, les nitrosonaphtalimides, les marqueurs de spin, les composés de tétrazolium, les phénazines, les pyridines, les anthraquinones, les quinoxalines, les pyrimidoquinones, les phénylhydroxylamines, les indanthrones, les phénanthrène-quinones et les complexes métalliques organiques, et
le groupe quencher oxydable étant choisi parmi les hydroquinones, les phénylènediamines, les dihydrophénazines, les dihydronaphtoquinones, les dihydroanthraquinones et les complexes métalliques organiques et dans lequel F est un groupe fluorophore non réductible ou oxydable par la réaction redox,
le groupe quencher Q réduisant partiellement ou supprimant complètement l'intensité de fluorescence ou la durée de persistance de la fluorescence du groupe fluorophore F,
**caractérisé en ce que**
le réactif contient en outre une enzyme pour la réduction ou l'oxydation de l'analyte et éventuellement une co-enzyme.

**15.** Réactif selon la revendication 14, comprenant d'autres composants choisis parmi les adjuvants, les tampons et les médiateurs.

**Figur 1**

**Figur 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0431456 B
- EP 0574769 B
- EP O620283 A
- EP 0190740 B
- WO 9306487 A
- EP 0831327 B
- EP 0441222 A
- EP 0505494 A
- US 5912139 A
- US 6468753 B1
- JP 63277680 A

**In der Beschreibung aufgeführte Nicht-Patentliteratur**

- **Ryabov et al.** *JBIC,* 1999, vol. 4, 175-182
- **Woltman et al.** *Anal Chem.,* 1999, vol. 71, 1504-1512
- **R. Haughland.** Handbook of Fluorescent Probes and Research Chemicals. 1996
- **J.R. Lakowicz.** Pronciples of Fluorescence Spectroscopy. Kluwer Academic/Plenum Publishers, New York, 1999
- **Zhang et al.** *Journal of Photochemistry and Photobiology A: Chemistry,* 1997, vol. 103, 63-67
- **Song et al.** *Dyes and Pigments,* 1999, vol. 42, 149-158
- **Borchardt et al.** *J. Amer. Chem. Soc.,* 1972, vol. 94 (26), 9175-9182